# EUROPEAN PATENT APPLICATION

(11) **EP 2 059 021 A1**
(43) Date of publication of application: **13.05.2009**
(21) Application number: 08168663.6
(22) Date of filing: 07.11.2008
(51) Int. Cl.: H04N 5/00

(54) **Image processing apparatus having a capability to search information and control method thereof**

(30) Priority: 12.11.2007 KR 20070114690
(71) Applicant: Samsung Electronics Co., Ltd., Suwon-si, Gyeonggi-do 442-742 (KR)
(72) Inventor: Koh, Kwang-hyun, Seoul (KR)
(74) Representative: Robinson, Ian Michael

(57) **Abstract**

A control method of an image processing apparatus which communicates with a server, the control method including: receiving image content including additional information; processing and displaying the received image content; receiving a selection signal to select an information searching function; transmitting the additional information of the image content to the server; and receiving at least one search word related to the image content from the server and generating a list.

## Description

### BACKGROUND OF THE INVENTION

### 1. Field of the Invention

Apparatuses and methods consistent with the present invention relate to an image processing apparatus and a control method thereof, and more particularly, to an image processing apparatus which searches information by a user, and a control method thereof.

### 2. Description of the Related Art

Generally, an image processing apparatus receives an image signal from an external device such as a DVD device to display it, or processes image content received from a broadcasting station to display it. The broadcasting station may add additional information related to the image content (e.g., titles, synopses, themes, channel information, etc.) to the image content. Thus, the image processing apparatus may use the additional information included in the received image content. Here, the additional information may include an electronic program guide (EPG).

Meanwhile, the image processing apparatus performs two-way communication through the Internet. Thus, a user may receive information service and video content as well as broadcasting, or searching service to search desired information with the image processing apparatus.

A user may input a search word to search information with the image processing apparatus. However, it is not convenient to input characters with a remote controller. That is, each button of the remote controller used to input characters has a plurality of set character values. Thus, a user has to press the button several times to input a desired search word.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, it is an aspect of the present invention to provide an image processing apparatus which performs a search function easily and quickly, and a control method thereof.

Also, it is another aspect of the present invention to provide an image processing apparatus which performs a search function without receiving a character input from a user, and a control method thereof.

Additional aspects of the present invention will be set forth in part in the description which follows and, in part, will be obvious from the description, or may be learned by practice of the present invention.

The foregoing and/or other aspects of the present invention are also achieved by providing a control method of an image processing apparatus which communicates with a server, the method comprising: receiving image content including additional information; processing the received image content; determining whether a selection signal to select an information searching function is received; selection signal to select an information searching function is received, transmitting the additional information of the image content to the server; receiving from the server at least one search word related to the image content in response to the transmitting of the additional information; and generating a list, wherein the list includes at least one search word received from the server.

The receiving the at least one search word may comprise receiving search frequency information corresponding to each search word.

The generating the list may comprise arranging the at least one search word based on the search frequency information.

The receiving the at least one search word may comprise receiving category information corresponding to each search word of at least one search word.

The generating the list may comprise arranging the at least one search word based on the category information.

The generating the list may further comprise arranging the at least one search word based on the search frequency information.

The control method may further comprise: selecting a desired search word from the list; transmitting the desired search word to the server; and receiving a search result corresponding to the desired search word transmitted to the server.

The additional information may include EPG information.

The foregoing and/or other aspects of the present invention are also achieved by providing an image processing apparatus comprising: a receiver which receives image content including additional information; a processor which processes the image content received by the receiver; and a controller which determines if an information searching function is selected, and if the information searching function is selected, the controller transmits the additional information to the server, controls the communicator to receive from the server at least one search word related to the image content, and generates a list, wherein the list includes the at least one search word received from the server.

The image processing apparatus may further comprise: a user interface (UI) generator, wherein the communicator receives search frequency information corresponding to each search word of the at least one search word, and the controller controls the UI generator to generate the list such that the at least one search word is arranged based on the search frequency information.

The communicator may receive category information corresponding to each search word of the at least one search word, and the controller may control the UI generator to generate the list such that the at least one search word is further arranged based on the category information.

The image processing apparatus may further comprise: a user input unit, wherein if a desired search word is selected from the list, the controller transmits the desired search word to the server, and receives a search result corresponding to the transmitted search word.

Another aspect of the present invention may include a control method of an image processing apparatus, the method comprising: receiving image content including additional information; processing the received image content; receiving a selection signal to select an information searching function; retrieving at least one search word corresponding to the image content from the additional information in response to the receiving of the selection signal; and generating a list, wherein the list includes the at least one search word retrieved from the additional information.

The receiving the at least one search word may comprise receiving category information corresponding to the at least one search word.

The generating the list may comprise arranging the at least one search word based on the category information.

The control method may further comprise: selecting a desired search word from the list; transmitting the desired search word to a server; and receiving a search result corresponding to the desired search word transmitted to the server.

The additional information may include EPG information.

Another aspect of the present invention may include a control method having a server apparatus which communicates with an image processing apparatus, wherein the image processing apparatus receives image content and additional information corresponding to the image content, the method comprising: receiving the additional information from the image processing apparatus; retrieving at least one search word corresponding to the additional information received from the image processing apparatus; transmitting the at least one search word to the image processing apparatus; receiving a desired search word selected by the image processing apparatus; generating a search result based on the desired search word; and transmitting the search result to the image processing apparatus.

The control method may further comprise retrieving category information corresponding to the search word. The additional information may include EPG information.

The control method may further comprise retrieving frequency information for the at least one search word. The at least one search word may be transmitted with the corresponding category information. The at least one search word may also be transmitted with the corresponding frequency information.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 is a control block diagram of an image processing apparatus according to an exemplary embodiment of the present invention;
FIG. 2 illustrates a list in which search words are arranged according to the exemplary embodiment of the present invention;
FIG. 3 illustrates a user input unit according to the exemplary embodiment of the present invention;
FIG. 4 is a flowchart of a control method of the image processing apparatus according to the exemplary embodiment of the present invention;
FIG. 5 illustrates a list in which search words are classified into categories according to the exemplary embodiment of the present invention;
FIG. 6A illustrates a list in which search words are arranged according to the exemplary embodiment of the present invention; and
FIG. 6B illustrates a list in which search words are arranged corresponding to an input word if a part of the search words is input according to the exemplary embodiment of the present invention.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

### [First Exemplary Embodiment]

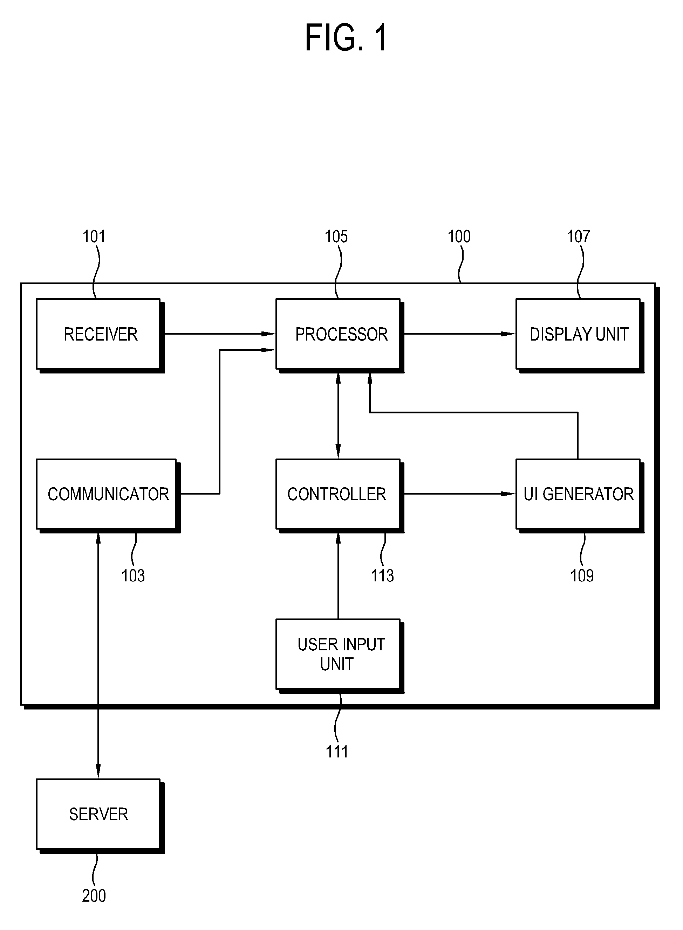

FIG. 1 is a control block diagram of an image processing apparatus 100 according to an exemplary embodiment of the present invention. As shown therein, the image processing apparatus 100 according to the present embodiment includes a receiver 101, a communicator 103, a processor 105, a display unit 107, a user input unit 111, a user interface (UI) generator 109 and a controller 113. The image processing apparatus 100 may search information by communicating with a server 200.

The receiver 101 of the image processing apparatus 100 according to an exemplary embodiment of the present invention receives image content including additional information. The receiver 101 may include a tuner (not shown) to receive the image content.

The additional information relates to image content, e.g., electronic program guide (EPG) information including stories, themes, titles, genres and channel information of the image content.

The tuner may include a single tuner or a plurality of tuners, a demodulator to demodulate a tuned signal, a decoder and a multiplexer. The tuner tunes a broadcasting signal having a frequency band corresponding to a tuning control signal of the controller 113 (to be described later). Video and audio signals and other data included in the broadcasting signal are time-division multiplexed and packetized to generate transport streams.

For example, the demodulator vestigial sideband (VSB) demodulates a digital broadcasting signal and corrects errors from the digital broadcasting signal to output a transport stream. The tuner may include both an analog tuner and a digital tuner, or a multi-tuner to receive both an analog broadcasting signal and a digital broadcasting signal.

The communicator 103 communicates with the server 200 according to a control of the controller 113, and transmits a search word input by a user. That is, the communicator 103 transmits the search word input by a user to the server 200 and receives a search result from the server 200. The communicator 103 includes a wired or wireless LAN unit, a modem, a Wireless Broadband (WiBro) unit, a High-Speed Downlink Packet Access (HSDPA) unit etc., to communicate with the server 200.

If the search word is input from the image processing apparatus 100, the server 200 supplies the search result corresponding to the input search word to the image processing apparatus 100. Particularly, the server 200 according to an exemplary embodiment of the present invention collects search words searched by other image processing apparatuses 100. The collected search words may be stored in the server 200 in order of a search frequency. If the additional information is received from the image processing apparatus 100, the server 200 transmits the search word related to the image content to the image processing apparatus 100 based on the additional information, among the collected search words.

The processor 105 processes the image content received through the receiver 101 according to a control of the controller 113, and converts the image content into a format displayable on the display unit 107, e.g., a digital RGB signal, and outputs the signal to the display unit 107. The processor 105 according to the present exemplary embodiment may include an additional information processor (not shown) to process the additional information of the image content.

The processor 105 may have various functions corresponding to formats of the input image signal. For example, the processor 105 may have an analog-to-digital (A/D) conversion function converting various types of image signals into digital image signals, a digital decoding function, a scaling function scaling a vertical frequency, resolution and picture ratio of a digital image signal and/or an analog image signal according to an output standard of the display unit 107 and a predetermined format conversion function.

The display unit 107 displays thereon the image content processed by the processor 105. The display unit 107 may include a digital light processing (DLP), a liquid crystal display (LCD), a plasma display panel (PDP), etc. The display unit 107 may be additionally provided in an external part of the image processing apparatus 100.

The user input unit 111 includes keys to perform a search function. The user input unit 111 may include a menu key provided in a remote controller or a casing of the image processing apparatus 100 and a key signal generator generating a key signal corresponding to key manipulation.

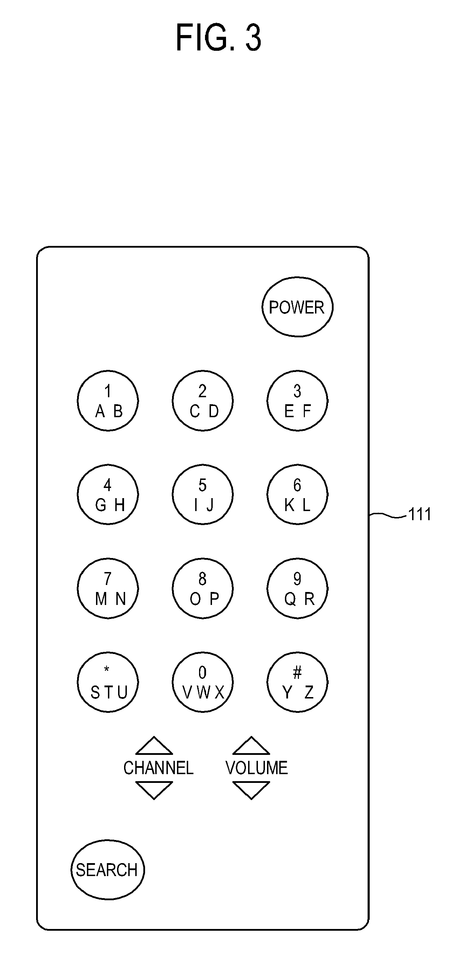

Referring to FIG. 3, the user input unit 111 includes a number key and a direction key to select channel numbers, and a search key to select an information searching function. The user input unit 111 may include other keys which are not shown.

Particularly, each number key of the user input unit 111 may have at least one character value to input characters. For example, if a word "WALTZ" is to be input with the user input unit 111, a user selects number keys in order of 0-1-6-*-#.

The UI generator 109 arranges at least one search word received from the server 200 and generates a list with the search words according to a control of the controller 113. The UI generator 109 may include an on screen display (OSD) generator, and may be included in the processor 105 processing the image content. The generated list is input to a part of the display unit 107.

The controller 113 communicates with the server 200 and receives at least one search word related to the image content if the search function is selected. The controller 113 may include a CPU, a microcomputer, etc.

If the image content is received through the receiver 101, the controller 113 controls the processor 105 to process the image content, and controls the display unit 107 to display the image content thereon. The additional information included in the image content is processed by the additional information processor. The processed additional information may be displayed on a part of the display unit 107 according to a user's request.

If the search function is selected through the search key provided in the user input unit 111, the controller 113 controls the communicator 103 to transmit the additional information of the currently-displayed image content to the server 200.

As described above, the server 200 stores therein the search words collected from other image processing apparatuses like image processing apparatus 100. If the additional information is transmitted from the image processing apparatus 100, the server 200 transmits at least one search word related to the image content to the image processing apparatus 100 based on the additional information.

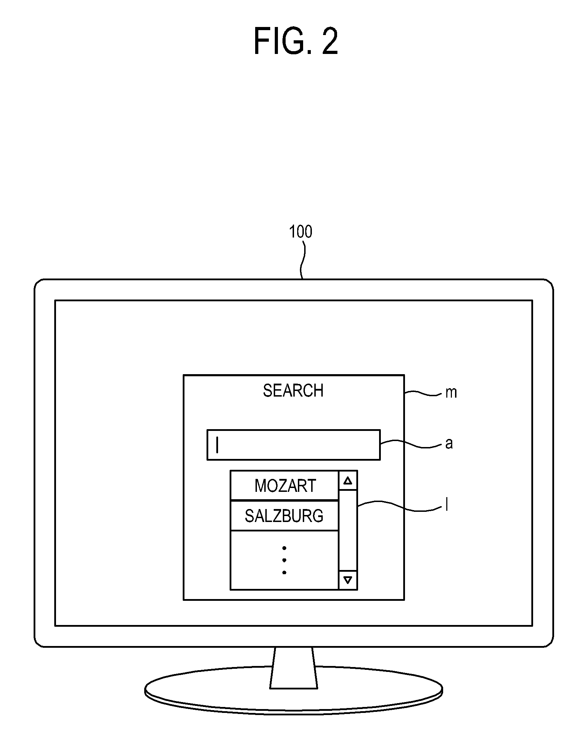

If at least one search word is received from the server 200, the controller 113 controls the UI generator 109 to arrange the received search word and generate a list. Referring to FIG. 2, the UI generator 109 generates a menu window M including an input window A and a list window L if the search function is selected. Search words such as "MOZART" and "SALZBURG" received from the server 200 are displayed on the list window L as a list. If all the search words are not displayed on the list window L, a scroll bar may be generated. It is noted that the search word may be provided within the additional information or the search words may be provided from the operator of the server 200 and not necessarily collected from other image processing apparatuses 100.

A user searches a search word from the list displayed on the list window L with a key provided in the user input unit 111, and selects a search word from the list. A user may directly input a search word with the input window A.

If one of the search words is selected from the list through the user input unit 111, the controller 113 transmits the selected search word to the server 200. If receiving the search word, the server 200 supplies a search result, i.e., desired information to the image processing apparatus 100. The controller 113 receives the search result corresponding to the search word from the server 200 and displays the search result on the display unit 107.

The image processing apparatus 100 according to the present exemplary embodiment may receive the search word related to the image content and search frequency information on each search word from the server 200. The controller 113 arranges the search word based on the search frequency information. If a user views the same image content, the same information may be likely to be searched. The controller 113 may control to display frequently-searched search words of other image processing apparatuses 100 on top of the list.

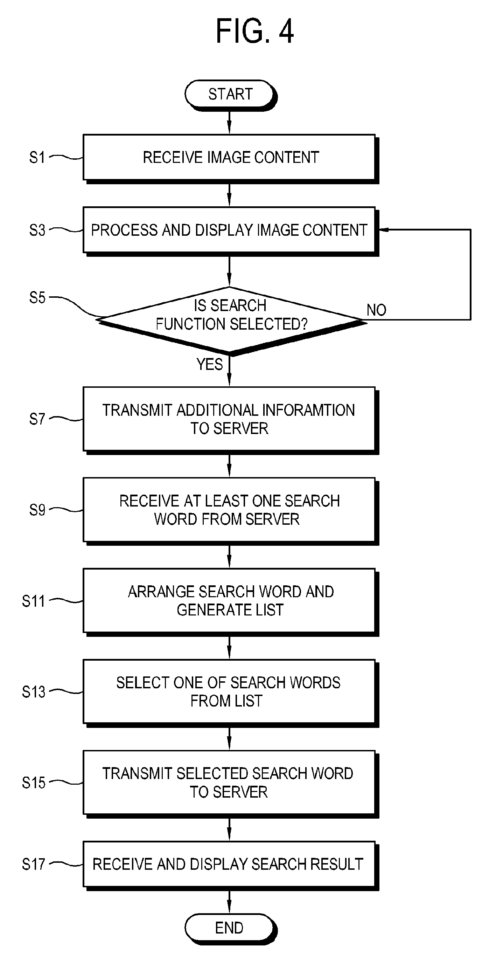

A control method of the image processing apparatus 100 according to the exemplary embodiment of the present invention will be described with reference to FIG. 4. FIG. 4 is a flowchart to describe a control process of the image processing apparatus 100 communicating with the server 200 and performing the search function according to the present exemplary embodiment.

As shown therein, the image processing apparatus 100 receives the image content (S1), and processes and displays the received image content (S3).

If a user selects the information searching function and if the selection signal is received (S5), the controller 113 transmits the additional information of the image content to the server 200 (S7). The additional information may be at least some of the EPG information such as the title of the current program corresponding to the image content. As described above, the server 200 stores therein the search words collected from other image processing apparatuses 100.

If at least one search word related to the image content is received from the server 200 corresponding to the additional information (S9), the controller 113 controls the UI generator 109 to arrange the received search word and generate the list (S11). In case the search word is included in the additional information itself, the steps (S7) and (S9) may be skipped and instead, the search words may be retrieved from the additional information.

Each search word received from the server 200 may include information on the search frequency. The controller 113 may control the UI generator 109 to generate the list with the received search words based on the search frequency.

If one of the search words is selected from the list through the user input unit 111 (S13), the controller 113 transmits the selected search word to the server 200 (S15). If the server 200 transmits the search result of the search word, the controller 113 controls the processor 105 to process and display the search result (S17).

If the search function is selected, the image processing apparatus 100 displays the search word related to the currently-displayed image content and performs the search function easily and quickly without receiving user's input.

As the server 200 supplies the search word related to the currently-displayed image content, the image processing apparatus 100 may be very likely to receive desired search words.

Moreover, as the frequently-searched word is displayed first among the search words related to the image content, a user may easily receive the exact search word.

### [Second Exemplary Embodiment]

Hereinafter, an image processing apparatus 100 according to a second exemplary embodiment of the present invention will be described with reference to FIG 1. Repetitive descriptions will be avoided as necessary.

The image processing apparatus 100 according to the second exemplary embodiment receives a search word and a category including each search word, from a server 200.

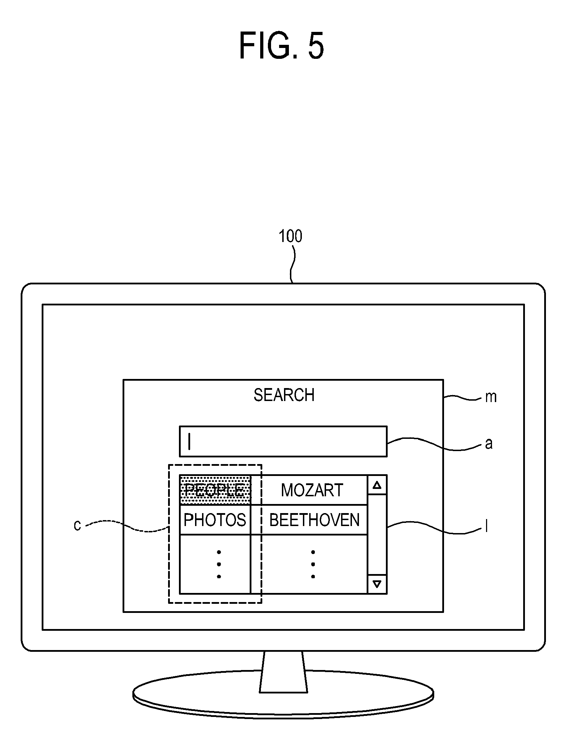

If the search word and the category information including each search word are received, a controller 113 controls a UI generator 109 to generate a list based on the category information. Referring to FIG. 5, a list L includes a category c such as "PEOPLE" and "PHOTOS." If the "PEOPLE" is selected from the category c, a people category is activated. Then, among the search words received from the server 200, "MOZART" and "BEETHOVEN" which are classified into the people category, are displayed. The search words classified into each category may be arranged in order of a search frequency.

As the search words are classified into categories, a user may select the category including a desired search word and perform the search function more easily.

Similar to the first exemplary embodiment, the search words and the category information corresponding to the search words may be included within the additional information and may be retrieved from the additional information.

### [Third Exemplary Embodiment]

Hereinafter, an image processing apparatus 100 according to a third exemplary embodiment of the present invention will be described with reference to FIG 1. Repetitive descriptions will be avoided as necessary.

A controller 113 according to the third exemplary embodiment may control to display only a search word including character(s) input through a user input unit 111, among search words included in a list.

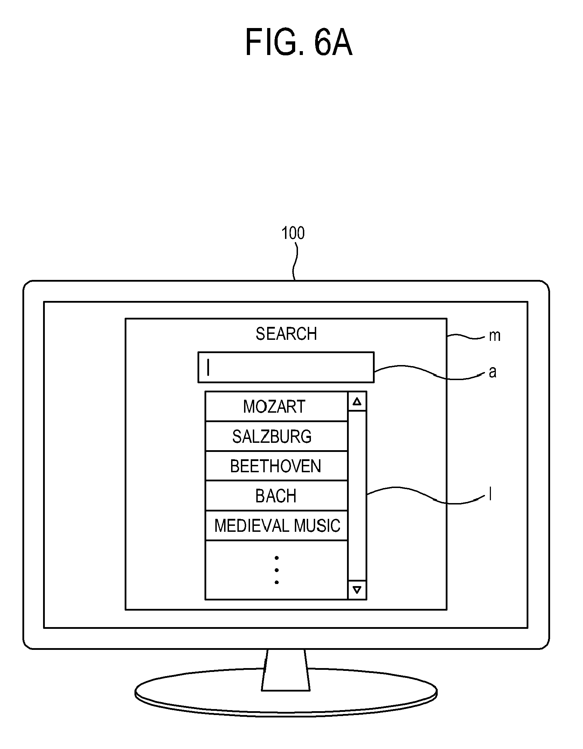

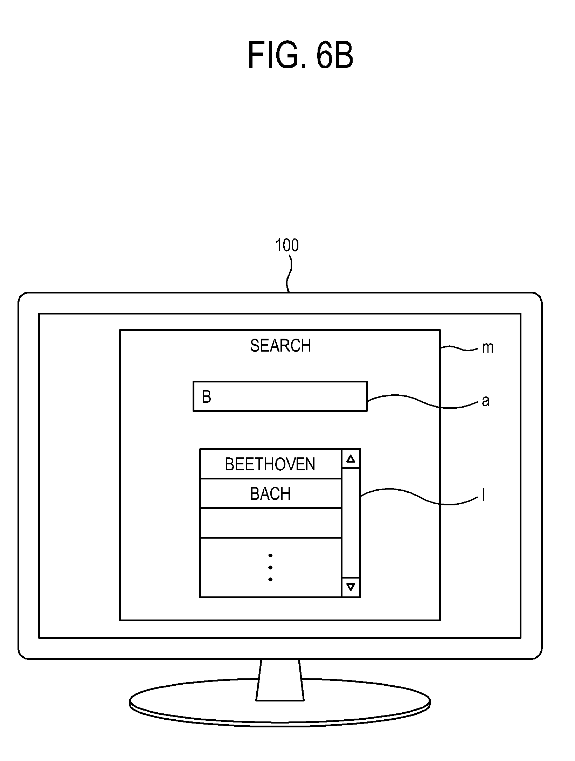

Referring to FIG. 6A, Search words "MOZART", "SALZBURG", "BACH", "BEETHOVEN" and "MEDIEVAL MUSIC" which are received from a server 200 are arranged and displayed on a list. As shown in FIG. 6B, if a user inputs "B" to an input window a through the user input unit 111, search words starting with "B" such as "BACH" and "BEETHOVEN" are displayed on a list window L.

Thus, a user inputs only a part of characters of the search word and easily searches a desired search word among a plurality of search words received from the server 200.

Similar to the first and the second exemplary embodiment, the search words including the character(s) input the by user input unit 111 may be included within the additional information and may be retrieved from the additional information.

As described above, an aspect of the present invention provides an image processing apparatus and a control method thereof which performs a search function quickly and conveniently even though a user does not directly or completely input a search word.

Also, an aspect of the present invention provides an image processing apparatus and a control method thereof which may receive a desired search word by receiving a search word related to a currently-displayed image content, and performs a search function even though a user does not directly input characters.

Among the search words related to the image content, frequently-searched words may be displayed first so that a user may receive a desired search word easily.

Further, an aspect of the present invention provides an image processing apparatus and a control method thereof which enables a user to search a desired search word easily among a plurality of search words received from a server or included within the additional information, and performs a search function more easily if a user input a part of characters of the search word.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A control method of an image processing apparatus (100) which communicates with a server (200), the method comprising:
receiving image content including additional information;
processing the received image content;
determining whether a selection signal to select an information searching function is received;
if the selection signal to select the information searching function is received, transmitting the additional information of the image content to the server (200);
receiving from the server (200) at least one search word related to the image content in response to the transmitting of the additional information; and
generating a list, wherein the list includes the at least one search word received from the server (200).

2. The control method according to claim 1, wherein the step of receiving the at least one search word comprises receiving search frequency information corresponding to each search word.

3. The control method according to claim 2, wherein the step of generating the list comprises arranging the at least one search word based on the search frequency information.

4. The control method according to claim 2, wherein the step of receiving the at least one search word comprises receiving category information corresponding to each search word of the at least one search word.

5. The control method according to claim 4, wherein the step of generating the list comprises arranging the at least one search word based on the category information.

6. The control method according to claim 5, wherein the step of generating the list further comprises arranging the at least one search word based on the search frequency information.

7. The control method according to any preceding claim, further comprising:
selecting a desired search word from the list;
transmitting the desired search word to the server (200); and
receiving a search result corresponding to the desired search word transmitted to the server (200).

8. The control method according to any preceding claim, wherein the additional information includes EPG information.

9. An image processing apparatus (100) comprising:
a communicator (103) which communicates with a server (200);
a receiver (101) which receives image content including additional information;
a processor (105) which processes the image content received by the receiver (101); and
a controller (113) which determines if an information searching function is selected, and if the information searching function is selected, the controller (113) transmits the additional information to the server (200), controls the communicator (103) to receive from the server (200) at least one search word related to the image content, and generates a list, wherein the list includes the at least one search word received from the server (200).

10. The image processing apparatus (100) according to claim 9, further comprising:
a user interface (UI) generator (109), wherein the communicator (103) receives search frequency information corresponding to each search word of the at least one search word, and the controller (113) controls the UI generator (109) to generate the list such that the at least one search word is arranged based on the search frequency information.

11. The image processing apparatus (100) according to claim 10, wherein the communicator (103) receives category information corresponding to each search word of the at least one search word, and the controller (113) controls the UI generator (109) to generate the list such that the at least one search word is further arranged based on the category information.

12. The image processing apparatus (100) according to claim 9, further comprising:
a user input unit (111), wherein if a desired search word is selected from the list, the controller (113) transmits the desired search word to the server (200), and receives a search result corresponding to the transmitted search word.

13. A control method of an image processing apparatus (100), the method comprising:
receiving image content including additional information;
processing the received image content;
receiving a selection signal to select an information searching function;
retrieving at least one search word corresponding to the image content from the additional information in response to the receiving of the selection signal; and
generating a list, wherein the list includes the at least one search word retrieved from the additional information.

14. A control method of a server (200) apparatus which communicates with an image processing apparatus (100), wherein the image processing apparatus (100) receives image content and additional information corresponding to the image content, the method comprising:
receiving the additional information from the image processing apparatus (100);
retrieving at least one search word corresponding to the additional information received from the image processing apparatus (100);
transmitting the at least one search word to the image processing apparatus (100);
receiving a desired search word selected by the image processing apparatus (100);
generating a search result based on the desired search word; and
transmitting the search result to the image processing apparatus (100).

15. The control method according to claim 14, further comprising retrieving category information corresponding to the search word or frequency information for the at least one search word.
